Europäisches Patentamt

European Patent Office

Office européen des brevets

(19)

(11) Numéro de publication: **0 346 195**
**A1**

(12) **DEMANDE DE BREVET EUROPEEN**

(21) Numéro de dépôt: **89401528.8**

(22) Date de dépôt: **02.06.89**

(51) Int. Cl.4: **B 66 B 5/18**
B 66 D 5/14, F 16 D 59/02

(30) Priorité: 08.06.88 FR 8807632
24.03.89 FR 8903900

(43) Date de publication de la demande:
**13.12.89 Bulletin 89/50**

(84) Etats contractants désignés:
**AT BE CH DE ES FR GB GR IT LI LU NL SE**

(71) Demandeur: **MOTEURS LEROY-SOMER (Société Anonyme française)**
**Bld. Marcellin-Leroy**
**F-16015 AngoulemeCedex (FR)**

(72) Inventeur: **Baldassare, Ferdinand**
**25 Avenue Molière**
**F-69860 Corbas (FR)**

(74) Mandataire: **Bouju, André**
**Cabinet Bouju 38 avenue de la Grande Armée**
**F-75017 Paris (FR)**

(54) Frein électromagnétique à machoires de serrage.

(57) Le frein électromagnétique (10) comprend un électro-aimant (13) et une armature mobile (14) attirée par cet électro-aimant (13) lorsque celui-ci est alimenté et écartée de celui-ci par des moyens formant ressort (15) lorsqu'il n'est pas alimenté. L'électro-aimant (13) et l'armature (14) sont respectivement montés articulés entre deux bras pivotants (21, 22) portant des mâchoires (23) destinées à serrer un élément à freiner (5, 6). Le frein comprend, en outre un amortisseur (34) opposant une résistance aux mouvements de l'armature (14) par rapport à l'électro-aimant (13) pour contrôler et ralentir la vitesse de serrage et de desserrage du frein (10).

L'amortisseur (34) est intégré au sein de l'ensemble constitué par l'armature (14) et l'électro-aimant (13).

Utilisation notamment pour le freinage des ascenseurs.

FIG.3

EP 0 346 195 A1

Bundesdruckerei Berlin

## Description

### Frein électromagnétique à machoires de serrage

La présente invention concerne un frein électro-magnétique à mâchoires de serrage.

La présente invention concerne notamment un frein électromagnétique particulièrement adapté au freinage des ascenseurs, sans être en aucune façon limitée à ce type d'application.

On sait qu'un ascenseur est habituellement entraîné par un moteur frein : le frein comprend d'une manière générale un électro-aimant et une armature mobile attirée par l'électro-aimant lorsque celui-ci est alimenté et écartée de celui-ci par des moyens formant ressort lorsqu'il n'est par alimenté, l'électro-aimant et l'armature étant respectivement montés articulés entre deux bras pivotants qui portent des mâchoires destinées à serrer un élément à freiner.

L'élément à freiner est habituellement un tambour cylindrique rotatif monté sur l'arbre du moteur, les garnitures de frein étant de forme cylindrique et présentant un diamètre intérieur sensiblement égal au diamètre extérieur du tambour rotatif. Ce type de frein est également, en général, à sécurité positive, en ce sens que le frein est serré sous l'action du ressort, et est desserré lorsque l'on alimente l'électro-aimant qui attire l'armature contre l'action du ressort. Le frein est donc serré par le ressort en cas de panne de courant.

Ce type de frein présente l'inconvénient d'être brutal et bruyant, étant donné les forces respectives du ressort et de l'électro-aimant. Lorsque ce dernier est alimenté, l'armature est attirée brutalement sur la carcasse de l'électro-aimant et le choc sur celui-ci produit un claquement bruyant métal sur métal. Lors de la coupure du courant, le choc des mâchoires sur le tambour sous l'action du ressort produit un autre claquement, moins bruyant du fait de la presence des garnitures. D'autre part, ces chocs répétés provoquent, à la longue, un matage des portées mécaniques, et donc des jeux qui augmentant le bruit et nuisent à la précision du freinage.

On connaît, par ailleurs, des freins pneumatiques ou hydrauliques, en particulier pour véhicules automobiles, qui peuvent être des freins à tambour ou des freins à disque. De tels freins, dont le fonctionnement est, par ailleurs, satisfaisant, nécessiteraient, pour un utilisation dans le cas d'un ascenseur, la présence d'une centrale hydraulique ou pneumatique nécessitant un entretien régulier.

Il a ainsi été proposé, dans le cas d'un frein électromagnétique à tambour actionné par un vérin pneumatique, de monter un amortisseur en parallèle avec le vérin pour opposer une résistance aux mouvements relatifs du corps et du piston du vérin.

Une telle solution est réservée aux installations disposant d'air comprimé et n'est applicable qu'aux cas où les déplacements relatifs des parties mobiles l'une par rapport à l'autre sont relativement importants. Une telle solution est de plus très encombrante.

Enfin, le développement récent, pour l'entraînement des ascenseurs, des moteurs linéaires qui sont particulièrement silencieux et précis et qui ne comportent aucune pièce tournante, rend nécessaire la mise au point d'un frein électromagnétique d'un type nouveau et qui soit silencieux.

Le but de l'invention est de proposer un frein électromagnétique du type précité qui soit silencieux, dont le fonctionnement ne soit pas brutal, et qui soit particulièrement adapté à une utilisation pour un ascenseur, notamment un ascenseur actionné par un moteur linéaire.

Le frein électromagnétique visé par l'invention comprend un électro-aimant et une armature mobile attirée par cet électro-aimant lorsque celui-ci est alimenté et écartée de celui-ci par des moyens formant ressort lorsqu'il n'est pas alimenté, l'électro-aimant et l'armature étant respectivement montés articulés entre deux bras pivotants portant des mâchoires destinées à serrer un élément à freiner. Il comprend, en outre, un amortisseur opposant une résistance aux mouvements de l'armature par rapport à l'électro-aimant pour contrôler et ralentir la vitesse de serrage et de desserrage du frein.

Suivant l'invention, ce frein est caractérisé en ce que l'amortisseur est intégré au sein de l'ensemble constitué par l'armature et l'électro-aimant.

La présence d'un amortisseur supprime la brutalité des mouvements de l'armature et des mâchoires du frein dans un sens et dans l'autre, et supprime donc pratiquement les chocs accompagnant ces mouvements et les bruits correspondants, sans pour autant diminuer la force de freinage. La suppression des chocs supprime également les effets de matage signalés plus haut.

En outre, l'intégration de l'amortisseur au sein de l'ensemble constitué par l'armature et l'électro-aimant donne au frein électromagnétique conforme à l'invention une structure très compacte toujours favorable dans le cas des freins électromagnétiques, et souvent intéressante pour de nombreuses applicationss de ceux-ci.

Selon une première version avantageuse de l'invention, l'amortisseur est un amortisseur hydraulique.

L'amortisseur hydraulique, qui utilise un fluide hydraulique incompressible, présente une courbe de réponse très nette et bien reproductible qui permet au technicien de régler de façon très précise les temps respectifs d'alimentation ou de mise hors tension de l'électro-aimant et du moteur d'entraînement de l'objet à freiner.

Selon une autre version avantageuse de l'invention, l'amortisseur est disposé au centre de l'électro-aimant, son axe longitudinal étant confondu avec celui de l'électro-aimant et de l'armature, la carcasse de l'électro-aimant constitue le corps de l'amortisseur, le ressort est disposé également au centre et suivant l'axe de l'électro-aimant et de l'armature, le piston est solidaire de l'armature et est traversé par une ouverture axiale allongée qui se prolonge, sans déboucher, à l'intérieur de la tige du piston en une cavité, et un mandrin de guidage solidaire du corps de l'amortisseur pénètre dans cette ouverture et cette cavité.

La présence de l'amortisseur, ainsi logé dans la partie axiale de l'électro-aimant qui est sensiblement inactive, n'augmente pratiquement pas l'encombrement de l'électro-aimant. On obtient ainsi un frein d'encombrement réduit et de construction simple, qui a une action d'amortissement efficace en dépit de la course habituellement faible de l'armature.

Selon une version préférée de l'invention, le frein électromagnétique fonctionne par manque de courant sous l'action du ressort, l'électro-aimant desserrant les mâchoires contre l'action du ressort quand il est alimenté, et il est associée à un ascenseur, celui-ci comprenant sur la cabine ou sur le contrepoids au moins un frein électromagnétique pour faire prise sur chacun des rails de guidage de la cabine ou du contrepoids. L'ascenseur est de préférence actionné par un moteur linéaire.

Pour ce type de moteur très souple et particulièrement silencieux, et pour lequel le courant peut être réglé de façon à maintenir la cabine immobile en attendant le serrage du frein, le fonctionnement du frein électromagnétique progressif et silencieux est parfaitement adapté aus manoeuvres douces, précises et silencieuses de l'ascenseur et améliore le confort et la sécurité des usagers. D'autre part, le frein électromagnétique selon l'invention permet de pallier l'absence de toute partie tournante sur le moteur.

D'autres particularités et avantage de l'invention apparaîtront encore dans la description détaillée ci-après.

Aux dessins annexés, donnés uniquement à titre d'exemples non limitatifs :

       - la figure 1 est une vue schématique en plan de la cabine et du contrepoids d'un ascenseur, le contrepoids étant équipé d'un moteur linéaire et de freins électromagnétiques selon un mode de réalisation de l'invention, et étant représenté coupé horizontalement suivant I-I à la figure 2 ;

       - la figure 2 est une vue schématique en élévation du contrepoids représenté à la figure 1 ;

       - la figure 3 est une vue agrandie en élévation, partiellement coupée, du frein électromagnétique représenté aux figures 1 et 2 ;

       - la figure 4 est une vue agrandie d'un détail de la figure 2 représentant deux freins électromagnétiques voisins ;

       - la figure 5 est une vue agrandie d'un détail de la figure 3, représentant l'amortisseur logé au centre de l'électro-aimant ;

       - la figures 6 est une vue agrandie d'un détail de la figure 5.

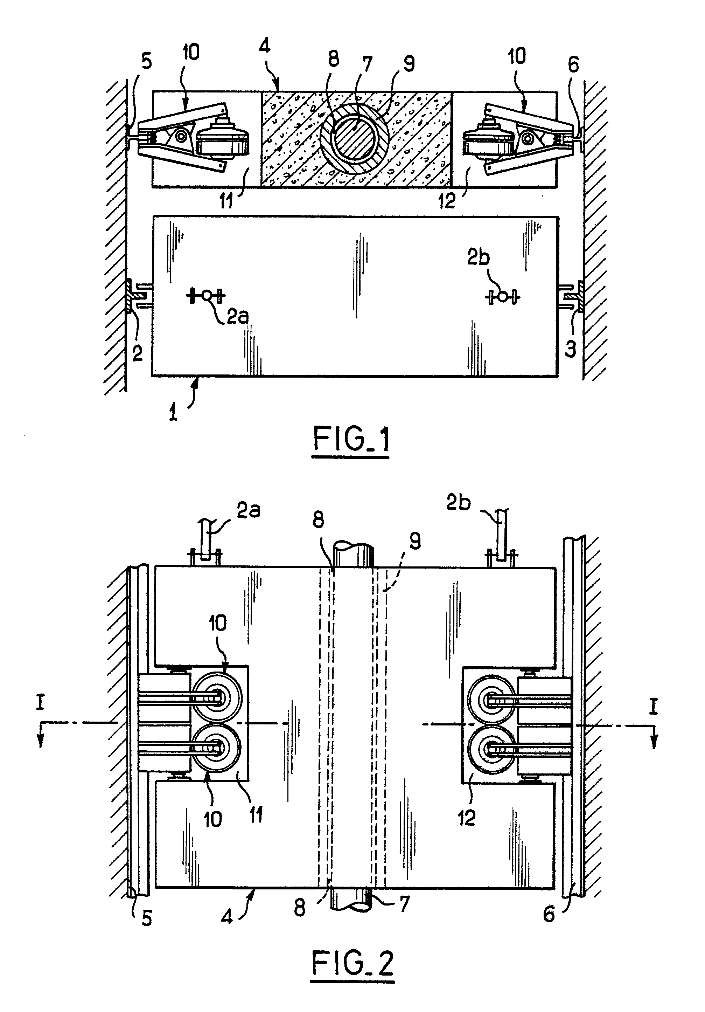

La figure 1 est une vue schématique en plan de la cabine 1 et du contrepoids 4 d'un ascenseur. La cabine 1 est guidée par deux rails verticaux de guidage 2, 3. Le contrepoids 4 est guidé par deux rails verticaux de guidage 5, 6 parallèles aux rails 2, 3.

L'ascenseur est actionné par un moteur linéaire installé sur le contrepoids 4. A cet effet, le contrepoids 4 présente selon son axe longitudinal vertical une ouverture axiale 8 traversée par un fût vertical fixe 7, sensiblement cylindrique, en métal ferromagnétique. Autour de l'ouverture 8 sont disposés sur le contrepoids 4 les aimants, enroulements et autres composants du moteur linéaire, schématisés en 9.

Dans l'exemple représenté à la figure 2, le contrepoids 4, qui est par exemple en béton, est muni de quatre freins électromagnétiques 10 selon l'invention, groupés deux par deux l'un au-dessus de l'autre, dans des évidements latéraux 11, 12 du contrepoids 4, de façon à pouvoir faire prise sur l'âme 5a, 6a du rail de guidage 5, 6, qui leur fait face.

De manière connue, la cabine 1 et le contrepoids 4 sont reliés l'une à l'autre par des câbles 2a, 2b passant sur des poulies non représentées.

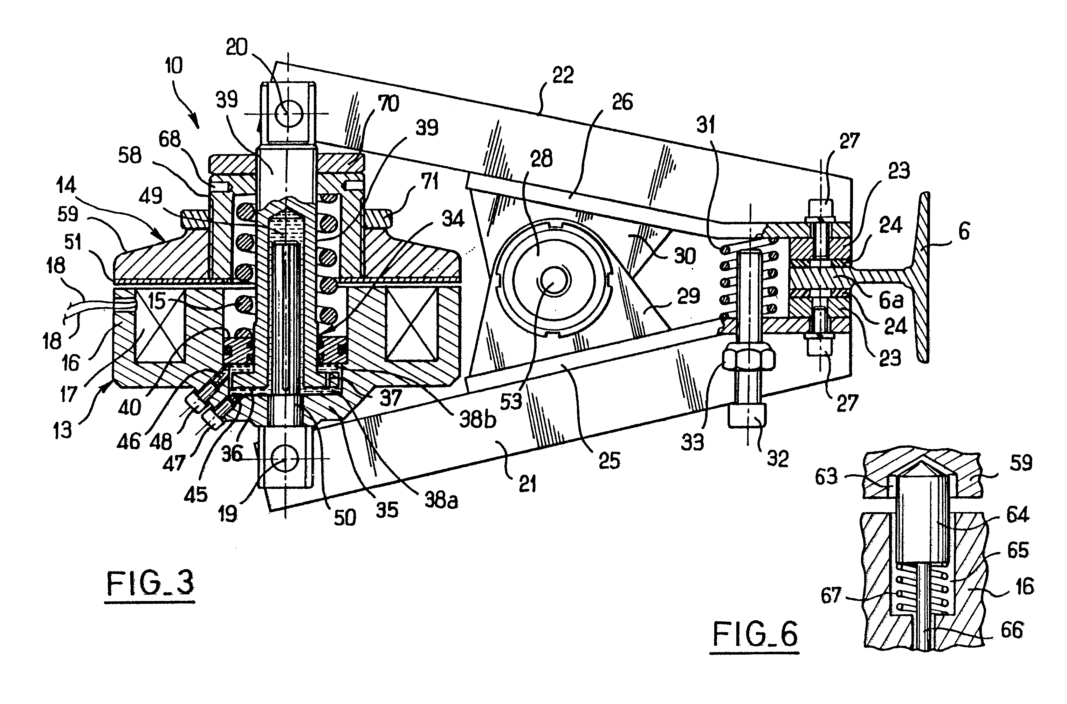

Dans le réalisation détaillée représentée aux figures 3, 4 et 5, le frein électromagnétique 10 comprend un électro-aimant bobiné 13 et une armature mobile 14 en fer doux attirée par l'électro-aimant 13 lorsque celui-ci est alimenté et écartée de celui-ci par un ressort 15 lorsqu'il n'est pas alimenté.

L'électro-aimant 13 comprend une carcasse 16 et un bobinage 17 alimenté en courant continu par un ensemble à redresseurs non représenté, par l'intermédiaire de conducteurs 18.

L'électro-aimant 13 et l'armature 14 sont respectivement montés articulés en 19 et 20 entre deux bras pivotants 21, 22, qui portent des mâchoires 23 munies chacune d'une garniture 24 de freinage, destinées à freiner le contrepoids 4 et la cabine 1, en serrant sous l'action du ressort 15 l'âme 6a du rail 6 qui est en mouvement relatif par rapport à celles-ci. Les bras 21, 22 sont perpendiculaires au rail 6.

Dans l'exemple représenté, chacun des bras 21, 22 est constitué de deux nervures parallèles, respectivement 21a, 21b et 22a, 22b, entourant à une de leurs extrêmités l'articulation correspondante 19, 20 et fixées, par exemple par soudage, sur une partie importante de leur longueur à partir de leur autre extrêmité, à une plaque 25, 26, qui porte les mâchoires 23 et qui est légèrement incurvée vers l'extérieur du frein dans la région qui porte les mâchoires (figure 3). Ainsi, quand le frein est serré, les mâchoires sont parallèles à l'âme 6a du rail 6.

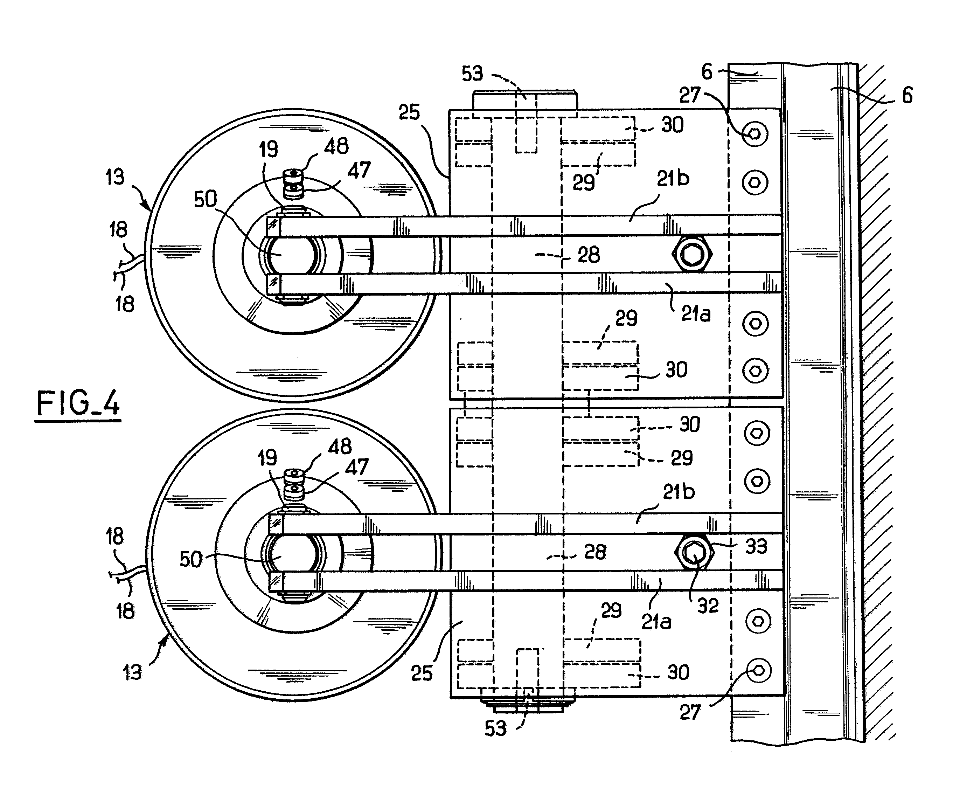

Dans l'exemple représenté à la figure 4, chacune des plaques 25, 26 a une dimension, dans la direction longitudinale du rail 6, sensiblement égale au diamètre extérieur de l'électro-aimant 13 et porte deux mâchoires 23 fixées, avec la garniture 24 dont elles sont chacune munies, par des vis 27.

Comme représenté en particulier à la figure 3, les bras 21, 22 sont montés pivotants autour d'un arbre commun 28 placé entre l'électro-aimant 13 et les mâchoires de serrage 23, et parallèle au rail 6.

A cet effet, chaque plaque 25, 26 porte deux flasques, respectivement 29, 30, qui sont fixés, par exemple, par soudage, perpendiculairement à celle-ci, vers l'intérieur du frein et parallèlement aux bras 21, 22. Ces flasques 29, 30 sont écartés dans la direction de l'axe 28 et du rail 6. Les flasques 29, 30 sont respectivement percés d'ouvertures alignées formant paliers pour recevoir l'arbre 28 et permettre le pivotement des bras 21, 22 autour de celui-ci.

Un petit ressort 31 facilite l'écartement des mâchoires 23 lorsque l'électro-aimant est alimenté, en permettant, en particulier, le rattrapage de jeux éventuels autour de l'arbre 28 et dans les articulations 19 et 20.

Une vis de déblocage 32 placée près des mâchoires 23 et vissée dans un trou taraudé de la plaque 25, permet d'écarter de force les mâchoires 23 contre l'action du ressort antagoniste 15 pour permettre l'accès aux garnitures 24 et l'entretien de celles-ci lorsque le frein est au repos et normalement serré. Un écrou 33, du type connu par exemple sous la marque NYLSTOP, est vissé sur la vis 32 en étant bloqué, sans pouvoir tourner mais mobile en translation, entre les deux nervures 21a et 21b du bras 21, et empêche une rotation intempestive de la vis 32 sous l'effet de la force du ressort 15.

Le frein 10 est fixé sur son support par l'intermédiaire de son arbre 28, par des moyens connus quelconques. Ainsi, dans la réalisation des figures 2 et 4, les deux freins 10 situés de chaque côté du contrepoids 4 sont montés sur le même arbre 28 dont les extrêmités présentent chacune un trou taraudé 53 permettant la fixation de l'arbre 28 sur le contrepoids 2.

Conformément à l'invention, le frein 10 comprend un amortisseur 34 qui oppose une résistance aux mouvements de l'armature 14 par rapport à l'électro-aimant 13 pour contrôler et ralentir la vitesse de serrage et de desserrage du frein 10. Comme représenté en détail à la figure 3, l'amortisseur 34 est disposé au centre de l'électro-aimant 13, son axe longitudinal étant confondu avec l'axe de l'électro-aimant 13 et de l'armature 14.

Dans l'exemple représenté, l'amortisseur 34 est un amortisseur hydraulique qui comprend un corps 35, constitué par la partie centrale évidée de la carcasse 16 de l'électro-aimant 13, et un piston 36 solidaire de l'armature 14.

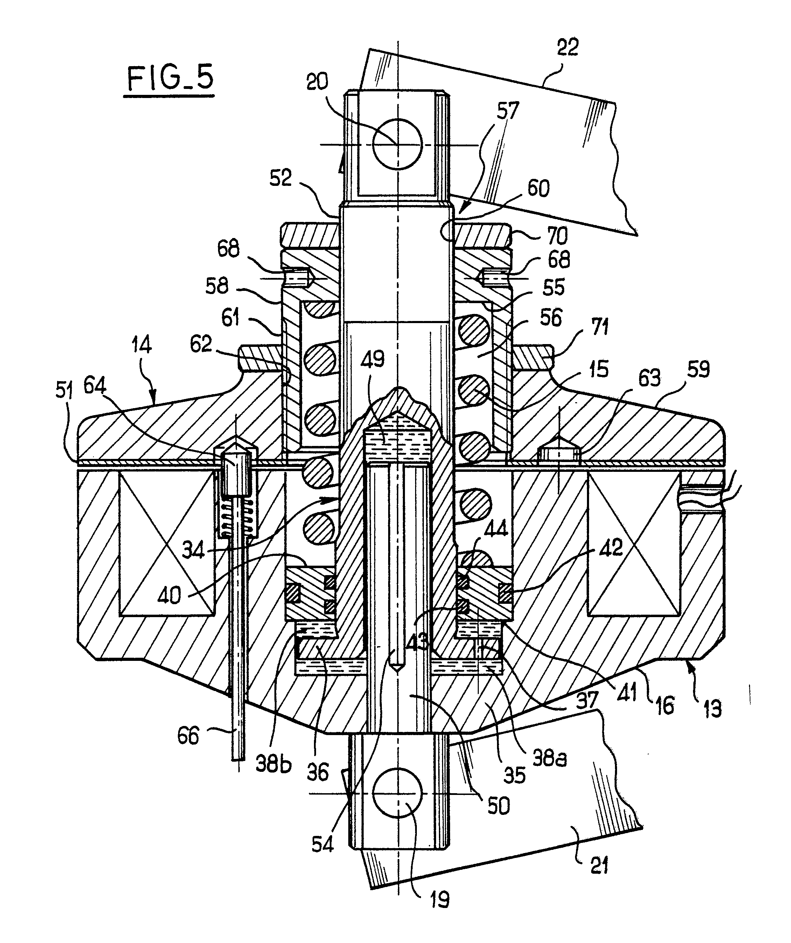

Comme représenté aux figures 3 et 5, le piston 36 est traversé par un orifice calibré 37 permettant le passage d'un fluide hydraulique contenu dans les chambres 38a et 38b à l'intérieur du corps 35 sous la pression exercée respectivement par l'électro-aimant 13 quant il est alimenté, et par le ressort antagoniste 15 dans le cas contraire.

Le corps 35 est fermé, côté tige 39 du piston 36, par un fond 40 fixe traversé selon son axe par la tige 39. Le fond 40 est maintenu en place contre un épaulement intérieur 41 de la surface intérieure du corps 35 sous l'action du ressort 15, et ferme de façon étanche la chambre 38b. Dans l'exemple représenté, il comporte à cet effet sur sa surface latérale extérieure un joint 42 pour assurer l'étanchéïté entre celle-ci et la surface latérale intérieure du corps 35, par rapport auquel il est fixe, et sur sa surface latérale intérieure, deux joints 43, 44 pour assurer l'étanchéïté entre celle-ci et la surface latérale de la tige 39 du piston 36 qui est mobile par rapport à lui.

Le corps 35 est percé d'un orifice de remplissage 45 de la chambre 38a située entre le piston 36 et le corps 35, et d'un orifice de remplissage 46 de la chambre 38b située entre le piston 36 et le fond 40. Les orifices 45 et 46 sont respectivement obturés de façon étanche par des bouchons 47 et 48 qui sont par exemple vissés dans des filetages intérieurs respectifs de ces orifices 45, 46. Les orifices 45 et 46 sont ménagés de préférence, non pas dans le plan de coupe de la figure 3, mais dans le plan perpendiculaire de façon que les bouchons 47 et 48 soient situés à la partie supérieure de la carcasse 16 de l'électro-aimant 13 lorsque le frein est monté dans sa position de service (voir figure 4), de façon à faciliter le remplissage du fluide hydraulique.

Dans la réalisation des figures 3 et 5, le piston 36 est traversé par une ouverture axiale allongée qui se prolonge, sans déboucher, à l'intérieur de la tige 39 du piston 36 en une cavité 49, et un mandrin de guidage 50 solidaire du corps 35 de l'amortisseur 34 et de la carcasse 16 de l'électro-aimant 13, pénètre dans cette ouverture et dans la cavité 49. Le diamètre extérieur du mandrin 50 est légèrement inférieur au diamètre intérieur de l'ouverture et de la cavité 49, afin que la tige 39 puisse coulisser librement autour du mandrin 50, tout en assurant un guidage précis du piston 36 et de la tige 39 et en permettant le libre passage du fluide hydraulique, entre tige 39 et mandrin 50, entre le fond de la cavité 49 et la chambre 38a. Pour faciliter le remplissage et le passage du fluide, une gorge longitudinale 54 est de préférence ménagée à la périphérie du mandrin 50 et relie la cavité 49 et la chambre 38a.

Comme indiqué aux figures 3 et 5, une mince plaque 51, en matériau amagnétique tel que bronze, aluminium ou acier inoxydable, est fixée sur la face de l'armature 14 en regard de l'électro-aimant 13, de façon à éviter un collage de l'armature 14 sur l'électro-aimant 13 par aimantation rémanente lorsque l'on met ce dernier hors tension.

Comme représenté en détail aux figures 5 et 6, le ressort 15, qui entoure la tige 39 du piston 36, s'appuie à une de ses extrémités contre le fond 40 du corps 35 de l'amortisseur 34, et à son autre extrémité contre le fond 55 d'un alésage 56 ménagé dans l'axe de l'armature 14, ce fond 55 présentant une ouverture axiale 57 traversée par la tige 39 du piston 36.

Comme représenté à la figure 5, l'armature 14 comporte un noyau central 58 présentant l'alésage axial 56 et l'ouverture axiale 57 et entourant le ressort 15, fixé sur la tige 39 du piston 36 et mobile axialement par rapport à celle-ci, et un plateau périphérique 59 fixé sur le noyau central 58 et mobile axialement par rapport à celui-ci.

La paroi périphérique intérieure de l'ouverture axiale 57 présente un filetage intérieur 60 conjugué du filetage extérieur 52 ménagé sur la tige 39 du piston 36 de l'amortisseur 34, ce qui permet de visser et dévisser le noyau 58 sur la tige 39 et donc de régler la position du noyau 58 sur la tige 39, ainsi que la pression du ressort 15.

La paroi périphérique extérieure du noyau 58 présente un filetage extérieur 61, et la paroi périphérique intérieure du plateau 59 présente un filetage intérieur 62 conjugué du filetage 61, ce qui permet de visser et dévisser le plateau 59 sur le noyau 58 et donc de régler la position du plateau 59 sur le noyau 58, ainsi que l'épaisseur e de l'entrefer entre l'électro-aimant 13 et le plateau 59 de l'armature 14.

Le noyau 58 est bloqué sur la tige 39 par un contre-écrou 70 d'un type connu quelconque du commerce, par exemple un écrou cranté.

De même, le plateau 59 est bloqué sur le noyau 58 par un contre-écrou 71 d'un type connu.

Par ailleurs, le frein électro-magnétique comprend des moyens 63, 64 pour bloquer en rotation le plateau périphérique 59 de l'armature 14 par rapport à l'électro-aimant 13.

Dans la réalisation représentée, ces moyens comprennent des évidements 63 ménagés dans la surface du plateau 59 de l'armature 14 en regard de l'électro-aimant 13 et régulièrement répartis autour de l'axe de l'armature 14, et un doigt rétractable 64 disposé dans un logement 65 ménagé dans la carcasse 16 de l'électro-aimant 13. Ce doigt 64 est destiné à pénétrer dans l'un des évidements 63 pour bloquer en rotation le plateau 59 de l'armature 14 par rapport à l'électro-aimant 13.

Le doigt 64 se prolonge du côté opposé au plateau 59 de l'armature 14 par une tige 66 qui traverse la carcasse 16 de l'électro-aimant 13 et dépasse vers l'extérieur de celle-ci.

Comme représenté en détail à la figure 6, un ressort 67 est placé entre le doigt 64 et le fond du logement 65. Ce ressort 67 sollicite en permanence le doigt 64 vers le plateau 59 de l'armature 14 et maintient le doigt 64 engagé dans l'un des évidements 63, comme représenté à la figure 5.

En outre, deux alésages radiaux 68 diamétralement opposés sont ménagés, par exemple, dans la partie périphérique extérieure du noyau 58 située au-delà de l'alésage 56 : ils permettent d'introduire un outil quelconque (non représenté) afin de faciliter la rotation du noyau 58 autour de la tige 39.

D'autre part, les filetages intérieurs 60, 62 et extérieurs 52, 61 ont de préférence un même pas, par exemple de 1 mm.

Pour l'assemblage de l'amortisseur 34 et de l'électro-aimant 13, on fixe de façon étanche, par exemple par vissage, le mandrin 50 dans l'axe de la carcasse 16 de l'électro-aimant 13 ; on enfile le piston 36 et sa tige 39 sur le mandrin 50 ; on met en place le fond 40 muni de ses joints d'étanchéité 42, 43, 44.

On introduit alors dans le logement 65 le ressort 67, puis le doigt 64. On introduit le ressort 15 autour de la tige 39 du piston 36, et on visse sur cette tige 39, pour comprimer le ressort 15 jusqu'à la pression voulue, le noyau 58 sur lequel on a vissé au préalable le plateau 59, en prenant soin de tirer la tige 66 en comprimant le ressort 67 pour faire rentrer complètement le doigt 64 dans le logement 65. Le doigt 64 ne peut donc pas gêner la rotation du plateau 59 autour du noyau 58.

On visse ou dévisse le plateau 59 sur le noyau 58 jusqu'à obtenir pour l'entrefer entre l'électro-aimant 13 et l'armature 14 l'épaisseur e voulue. On tourne alors légèrement le plateau dans un sens ou dans l'autre pour présenter devant le logement 65 l'évidement 63 le plus proche dans lequel pénètre le doigt 64 lorsqu'on libère la tige 66.

On visse alors le contre-écrou 70 sur la tige 39 pour bloquer le noyau 58, et le contre-écrou 71 sur le noyau 58 pour bloquer le plateau 59.

On assemble ensuite l'ensemble formé par l'électro-aimant et l'armature sur les bras 21 et 22 du frein.

Dans l'exemple précité où les filetages ont un même pas de 1 mm, et si l'on a prévu quatre évidements 63 dans le plateau 59, on peut régler l'épaisseur e de l'entrefer par paliers successifs de 0,25 mm.

Dans cet exemple, si l'on tourne le plateau 59 seul par rapport au noyau 58, on règle l'épaisseur e comme on vient de le décrire sans modifier la pression du ressort 15. Si l'on fait tourner en même temps le noyau 58 et l'armature 59, on règle en même temps la pression du ressort et l'épaisseur de l'entrefer.

On peut également faire tourner le noyau seul en maintenant le plateau 59 bloqué par rapport à la carcasse 16 de l'électro-aimant 13 au moyen du doigt 64 : on règle alors la pression du ressort 15 sans modifier l'épaisseur de l'entrefer.

On voit par ailleurs que la liaison vissée du noyau 58 sur la tige 39 est freinée par le contre-écrou 70 et par la pression exercée en permanence par le ressort 15 sur le noyau ; la liaison vissée du plateau 59 sur le noyau 58 est, quant à elle, bloquée par le doigt 64 et par le contre-écrou 71.

On va maintenant décrire le mode de fonctionnement du frein électromagnétique 10 conforme à l'invention en référence aux figures 1 à 6.

La frein électromagnétique 10 est représenté aux figures 3 et 5 dans la position serrée : l'électro-aimant 13 n'étant pas alimenté, le ressort 15 tend à écarter l'une de l'autre la carcasse 16 de l'électro-aimant et l'armature 14 : les bras 21 et 22 ont pivoté autour de l'arbre 28 et transmettent la force du ressort 15 aux mâchoires 23 et aux garnitures 24 qui serrent l'âme 6a du rail 6.

Lorsqu'on alimente le bobinage 17 de l'électro-aimant 13 par les conducteurs 18, la force magnétique produite par l'electro-aimant 13 est superieure à la force du ressort 15, et l'armature 14 est attirée vers la carcasse 16 contre l'action du ressort 15 et contre l'action de l'amortisseur 34. La force d'attraction de l'armature 14 est transmise par la tige 39 au piston 36. Sous l'effet de cette pression, le fluide hydraulique contenu dans la chambre 38a située entre piston 36 et corps 35 passe par l'orifice calibré 37, ce qui permet le déplacement du piston 36 vers le corps 35 jusqu'à ce que la plaque 51 soit en contact avec la carcasse 16 et que les pressions du fluide hydraulique de part et d'autre du piston 36 soient égales.

Le frein 10 est alors dans sa position desserrée, les mâchoires 23 se sont écartées, les garnitures de freinage 24 ne pressent plus l'âme 6a du rail de guidage 6. Le ressort 31 agit d'ailleurs pour écarter au maximum les mâchoires 23 et rattraper des jeux éventuels autour de l'axe 28 et dans les articulations 19 et 20.

Il est à noter que, dans cette position desserrée du frein, aucune contrainte, à l'exception de celle créée par le ressort 31 et qui est très faible, ne s'exerce sur les différentes articulations 19, 20 et sur l'arbre 28, de sorte que le frein 10 est sensiblement libre autour de son axe 28, ce qui permet un effet d'auto-centrage du frein 10 par rapport au rail 6 empêchant tout frottement d'une des garnitures 24 contre l'âme 6a du rail 6 et donc toute usure de celles-ci.

Il est également à noter que, dans l'exemple de réalisation décrit et représenté, la résistance qu'oppose l'amortisseur 34 aux déplacements de l'armature 14 est plus grande dans le sens du desserrage du frein que dans le sens du serrage, puisque la surface du piston côté corps, qui est active dans le premier sens, est supérieure à la surface côté tige qui est active dans le second sens : ceci correspond au fait que le claquement de l'armature 14 sur la carcasse 16 lors du desserrage du frein est plus bruyant que le claquement des garnitures 24 sur l'âme 6a du rail 6 lors du serrage de celui-ci, en dépit de la présence de la plaque 51.

Le mérite de l'invention est donc d'associer, à un électro-aimant, un amortisseur conçu pour être capable d'agir efficacement malgré la course très faible de l'armature dans un sens et dans l'autre, sans sensiblement modifier l'encombrement de l'électro-aimant, selon une structure simple et compacte très avantageuse sur le plan mécanique, et de proposer un frein particulièrement adapté à la nouvelle technique des ascenseurs actionnés par moteur linéaire, qui améliore sensiblement le confort et la sécurité des usagers.

Le frein électromagnétique conforme à l'invention a une structure simple permettant un fonctionnement silencieux et sans brutalité, tout en étant très fiable et en étant très peu sensible à l'usure.

Les spécialistes de ce domaine comprendront que, dans le cas d'un ascenseur actionné par un moteur linéaire, il convient de règler soigneusement, en fonction du temps de réponse de l'amortisseur 34, d'une part l'instant où l'on commande le serrage des freins par rapport à celui où l'on coupe le courant maintenant le contrepoids et la cabine à l'arrêt, d'autre part l'instant où l'on commande le desserrage des freins par rapport à celui où l'on alimente le moteur linéaire pour mettre en route l'ascenseur. Le temps de réponse de l'amortisseur dépend évidemment des caractéristiques de celui-ci, des forces respectives de l'électro-aimant 13 et du ressort antagoniste 15, et de la viscosité du fluide hydraulique.

Il est à noter qu'en ce qui concerne la viscosité du fluide hydraulique, la structure de frein électromagnétique que l'on vient de décrire avec un amortisseur dans l'axe de l'électro-aimant fait que le fluide est réchauffé par la chaleur dégagée dans l'électro-aimant et ne risque pas de se refroidir en période d'utilisation normale de l'ascenseur.

En cas de grand froid, si le fluide reste figé, le frein restera bloqué et l'ascenseur ne démarrera pas. Des essais successifs de démarrage avec envoi de courant dans l'électro-aimant conduiraient alors à un réchauffage rapide du fluide hydraulique, la sécurité restant, en tout état de cause, assurée.

On peut citer, à titre d'exemple, les caractéristiques suivantes d'un frein électromagnétique conforme à l'invention :

carcasse de l'électro-aimant :

| | |
|---|---|
| diamètre extérieur | 170 mm environ |
| diamètre intérieur | 60 mm environ ; |

amortisseur :

| | |
|---|---|
| diamètre intérieur du corps | 55 mm environ |
| diamètre extérieur de la tige | 31 mm environ |
| diamètre intérieur de la tige | 17 mm environ |
| viscosité du fluide ; | VG = 68 cs environ à 40°C |
| force du ressort 15 | 250 kg ; |
| force de l'électro-aimant | 300 kg ; |

alimentation de l'électro-aimant :

| | |
|---|---|
| desserrage du frein | 220 volts environ |
| maintien en position desserrée | 50 volts environ ; |

distances par rapport à l'axe de l'arbre 28 :

| | |
|---|---|
| axe de l'électro-aimant | 130 mm environ |
| axe des garnitures | 130 mm environ ; |
| force du ressort 31 | 5 ou 6 kg environ ; |
| diamètre de l'orifice calibré 37 | 2 mm environ ; |
| course de l'armature 14 | 1 à 2 mm environ ; |
| écartement total des garnitures 24 | 1 à 2 mm environ ; |
| temps de réponse de l'amortisseur | de l'ordre de 1 seconde |

Des essais conduits conformément aux règlements en vigueur sur un contrepoids équipé sur chaque rail, comme indiqué aux figures 2 et 4, de deux freins électromagnétiques ayant les caractéristiques précitées, ont montré qu'il est ainsi possible de freiner en statique une différence de masse de 600 kg (entre cabine et contrepoids) avec seulement trois freins, sur les quatre installés, en service, soit 200 kg par frein en service.

Bien entendu, l'invention n'est pas limitée au mode de réalisation et au mode d'utilisation que l'on vient de décrire, auxquels on peut apporter de nombreux changements et modifications sans sortir du domaine de l'invention.

Ainsi, dans le cas de l'entraînement d'un ascenseur par un moteur linéaire, les freins peuvent être montés sur la cabine et non sur le contrepoids. Les freins sont bien entendu utilisables avec des moteurs rotatifs, en particulier des moteurs à courant continu, pour lesquels le fonctionnement silencieux des freins est également appréciable. Les freins peuvent alors serrer aussi bien les rails de guidage de la cabine ou du contrepoids de l'ascenseur qu'un disque monté sur l'arbre du moteur.

L'utilisation des freins suivant l'invention n'est pas limitée aux seuls cas des ascenseurs, et peut être élargie à tous les types de levage et, d'une manière générale, à tous les entraînements pour lesquels on souhaite un fonctionnement progressif et silencieux d'un frein électromagnétique.

Il est également possible de modifier les structures, dimensions, formes, dispositions respectives des divers éléments constituant le frein électromagnétique selon l'invention : l'amortisseur peut ainsi être pneumatique, au lieu d'être hydraulique, être situé ailleurs que dans l'axe de l'électro-aimant ; l'amortisseur peut également avoir une action prépondérante dans le sens du serrage, l'invention n'étant pas limitée aux freins de sécurité ou d'arrêt actionnés par un ressort et desserrés par alimentation de l'électro-aimant. Le piston 36 peut présenter plusieurs orifices 37 de passage du fluide.

Par ailleurs, dans la réalisation de la figure 5, l'armature composée de deux éléments peut être solidaire du corps du cylindre et non du piston. En outre, la carcasse de l'électro-aimant peut être réalisée en deux éléments concentriques, à la place ou en supplément de la structure précitée de l'armature.

De même, on peut limiter les moyens de blocage du plateau 59 sur le noyau 58 au seul contre-écrou 71.

On peut aussi prévoir plusieurs doigts tels que le doigt 64 pour centrer le plateau 59 sur l'électro-aimant 13, ou prévoir un ou plusieurs doigt(s) utilisable(s) uniquement pour le réglage de la tension du ressort seule sans modifier l'épaisseur de l'entrefer, en forçant le noyau 58 à tourner à la fois par rapport à la tige 39 et au plateau 59 : dans ce dernier cas, le logement 65, 66 aurait une configuration différente et pourrait avoir par exemple un diamètre uniforme sur toute sa longueur pour l'introduction d'un doigt par l'extérieur dans ce logement au moment du réglage.

**Revendications**

1. Frein électromagnétique (10) comprenant un électro-aimant (13) et une armature mobile (14) attirée par cet électro-aimant (13) lorsque celui-ci est alimenté et écartée de celui-ci par des moyens formant ressort (15) lorsqu'il n'est pas alimenté, l'électro-aimant (13) et l'armature (14) étant respectivement montés articulés entre deux bras pivotants (21, 22) portant des mâchoires (23) destinées à serrer un élément à freiner (5, 6), le frein comprenant, en outre, un amortisseur (34) opposant une résistance aux mouvements de l'armature (14) par rapport à l'électro-aimant (13) pour contrôler et ralentir la vitesse de serrage et de desserrage du frein (10), caractérisé en ce que l'amortisseur (34) est intégré au sein de l'ensemble constitué par l'armature (14) et l'électro-aimant (13).

2. Frein électromagnétique conforme à la revendication 1, caractérisé en ce que l'amortisseur (34) est un amortisseur hydraulique.

3. Frein électromagnétique conforme à l'une des revendications 1 ou 2, caractérisé en ce que l'amortisseur (34) comprend un corps (35) et un piston (36) mobile à l'intérieur de celui-ci, ce corps (35) et ce piston (36) étant solidaires respectivement l'un de l'électro-aimant (13), l'autre de l'armature (14), le piston (36) étant traversé par un orifice calibré (37) permettant le passage d'un fluide contenu dans le corps (35) sous la pression exercée respectivement par l'électro-aimant (13) quand il est alimenté et par le ressort (15) dans le cas contraire.

4. Frein électromagnétique conforme à la revendication 3, caractérisé en ce que le corps (35) de l'amortisseur (34) est solidaire de l'électro-aimant (13) et enc e que le piston (36) est solidaire de l'armature (14).

5. Frein électromagnétique conforme à l'une des revendications 3 ou 4, caractérisé en ce que le piston (36) est traversé par une ouverture axiale allongée qui se prolonge, sans déboucher, à l'intérieur de la tige (39) du piston (36) en une cavité (49), et en ce qu'un mandrin de guidage(50) solidaire du corps (35) de l'amortisseur (34) pénètre dans cette ouverture et dans la cavité (49).

6. Frein électromagnétique conforme à l'une des revendications 1 à 5, caractérisé en ce que l'amortisseur (34) est disposé au centre de l'électro-aimant (13), son axe longitudinal étant confondu avec celui de l'électro-aimant (13) et de l'armature (14).

7. Frein électromagnétique conforme à l'une des revendications 3 à 6, caractérisé en ce que la carcasse (16) de l'électro-aimant (13) constitue le corps (35) de l'amortisseur (34).

8. Frein électromagnétique conforme à la revendication 7, caractérisé en ce que le ressort (15) est disposé également au centre et suivant l'axe de l'électro-aimant (13) et de l'armature (14).

9. Frein électromagnétique conforme à l'une des revendications 1 à 8, caractérisé en ce qu'il comporte des moyens (52, 58, 60) pour régler la pression des moyens formant ressort (15) et des moyens (59, 61, 62) pour régler l'épaisseur (e) de l'entrefer entre l'électro-aimant (13) et l'armature (14) du frein (10).

10. Frein électromagnétique conforme à la revendication 9, l'une au moins des deux parties (13, 14) constitutives de l'ensemble formé par l'électro-aimant (13) et par l'armature (14) étant fixée de façon mobile axialement à l'organe, corps (35) ou piston (36), de l'amortisseur (34) dont elle est solidaire, caractérisé en ce que ladite partie constitutive (13, 14) comprend un élément sensiblement central (58), lequel assure la fixation à l'organe correspondant (35, 36) de l'amortisseur (34), est mobile axialement par rapport à cet organe (35, 36), et reçoit la pression des moyens formant ressort (15), et un élément sensiblement périphérique (59) destiné à entrer en contact avec l'autre partie constitutive (14, 13) dudit ensemble lorsque l'électro-aimant (13) est alimenté, et qui est fixé de façon mobile axialement à l'élément central (58).

11. Frein électromagnétique conforme à la revendication 10, l'armature (14) étant solidaire du piston (36) de l'amortisseur (34), le ressort (15) entourant la tige (39) du piston (36) et s'appuyant à une de ses extrémités contre le fond (40) du corps (35) de l'amortisseur (34), et à son autre extrémité contre le fond (55) d'un alésage (56) ménagé dans l'axe de l'armature (14), ce fond (55) présentant une ouverture axiale (57) traversée par la tige (39) du piston (36), caractérisé en ce que l'armature (14) comporte un noyau central (58) présentant l'alésage axial (56) et l'ouverture axiale (57), fixé susr la tige (39) du piston (36) et mobile axialement par rapport à celle-ci, et un plateau périphérique (59) fixé sur le noyau central (58) et mobile axialement par rapport à celui-ci.

12. Frein électromagnétique conforme à la revendication 11, caractérisé en ce que le noyau central (58) de l'armature (14) est fixé sur la tige (39) par vissage sur un filetage (52) ménagé sur la paroi périphérique de la tige (39), et en ce que le plateau périphérique (59) de l'armature (14) est fixé sur le noyau central (58) de celle-ci par vissage sur un filetage (61) ménagé sur la paroi périphérique extérieure du noyau (58).

13. Frein électromagnétique conforme à l'une des revendications 1 à 12, caractérisé en ce qu'il comprend des moyens (63, 64 ; 71) pour bloquer en rotation le plateau périphérique (59) de l'armature (14) par rapport à l'électro-aimant (13).

14. Frein électromagnétique conforme à la revendication 13, caractérisé en ce que lesdits moyens comprennent des évidements (63) ménagés dans la surface du plateau (59) de l'armature (14) en regard de l'électro-aimant (13) et régulièrement répartis autour de l'axe de l'armature (14), et au moins un doigt (64) disposé dans un logement (65) ménagé dans la carcasse (16) de l'électro-aimant (13), ce doigt (64) étant destiné à pénétrer dans l'un des évidements (63) pour bloquer en rotation le plateau (59) de l'armature (14) par rapport à la carcasse (16) de l'électro-aimant (13).

15. Frein électromagnétique conforme à la revendication 14, caractérisé en ce que le doigt (64) est rétractable ou amovible.

16. Frein électromagnétique conforme à l'une des revendications 1 à 15, caractérisé en ce que les bras (21, 22) sont montés pivotant autour d'un arbre commun (28) placé entre l'électro-aimant (13) et les mâchoires de serrage (23).

17. Frein électromagnétique conforme à la revendication 16, caractérisé en ce qu'il est fixé sur son support par l'arbre (28) et est libre de pivoter autour de cet arbre (28) par rapport à l'élément à freiner (5, 6) lorsqu'il est desserré.

18. Frein électromagnétique conforme à l'une des revendications 1 à 17, caractérisé en ce qu'il fonctionne par manque de courant sous l'action du ressort (15), l'électro-aimant (13) desserrant les mâchoires (23) contre l'action du ressort (15) quand il est alimenté.

19. Frein électromagnétique conforme à la revendication 18, caractérisé en ce qu'il est associé à un ascenseur, celui-ci comprenant sur la cabine (1) ou sur le contrepoids (4) au moins un frein électromagnétique (10) pour faire prise sur chacun des rails de guidage (2, 3 ; 5, 6) de la cabine (1) ou du contrepoids (4).

20. Frein électromagnétique conforme à la revendication 19, caractérisé en ce que l'ascenseur est entraîné par un moteur linéaire (8, 9).

21. Frein électromagnétique conforme à la revendication 19, caractérisé en ce que l'ascenseur est entraîné par un moteur à courant continu.

FIG.1

FIG.2

FIG_3

FIG_6

EP 0 346 195 A1

FIG_4

FIG_5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 332 334  (SIEGERLAND-BREMSEN) <br> * En entier * <br> --- | 1 | B 66 B    5/18 <br> B 66 D    5/14 <br> F 16 D   59/02 |
| A | DE-U-8 611 403  (VOITH TURBO) <br> * Page 3, ligne 28 - page 4, ligne 3; figure 3 * <br> --- | 1 | |
| A | FR-A-1 487 504  (VOYER) <br> * En entier * <br> ----- | 1 | |

|  |
|---|
| DOMAINES TECHNIQUES RECHERCHES (Int. Cl.4) |
| B 66 B    5/18 <br> B 66 D    5/14 <br> F 16 D   59/02 |

Le présent rapport a été établi pour toutes les revendications

| Lieu de la recherche | Date d'achèvement de la recherche | Examinateur |
|---|---|---|
| LA HAYE | 12-09-1989 | ZAEGEL B.C. |